# EUROPEAN PATENT SPECIFICATION

(11) **EP 4 310 368 B1**
(45) Date of publication and mention of the grant of the patent: **08.10.2025**
(21) Application number: 22315160.6
(22) Date of filing: 20.07.2022
(51) Int. Cl.: F16H 61/448, B60K 17/356

(54) **A UTILITY VEHICLE**
NUTZFAHRZEUG
VÉHICULE UTILITAIRE

(43) Date of publication of application: 24.01.2024
(73) Proprietor: CNH Industrial France S.A.S., 91150 Morigny-Champigny (FR)
(72) Inventor: Le Brech, M. Laurent, 85170 Le Poire-sur-Vie (FR)
(74) Representative: CNH Industrial IP Department

(56) References cited:
- EP-A1- 0 547 947
- WO-A1-89/10280
- FR-A1- 3 045 515
- US-A- 3 303 901
- US-A- 3 583 512

## Description

### TECHNICAL FIELD

The present invention relates to a utility vehicle such as a grape harvester.

### BACKGROUND

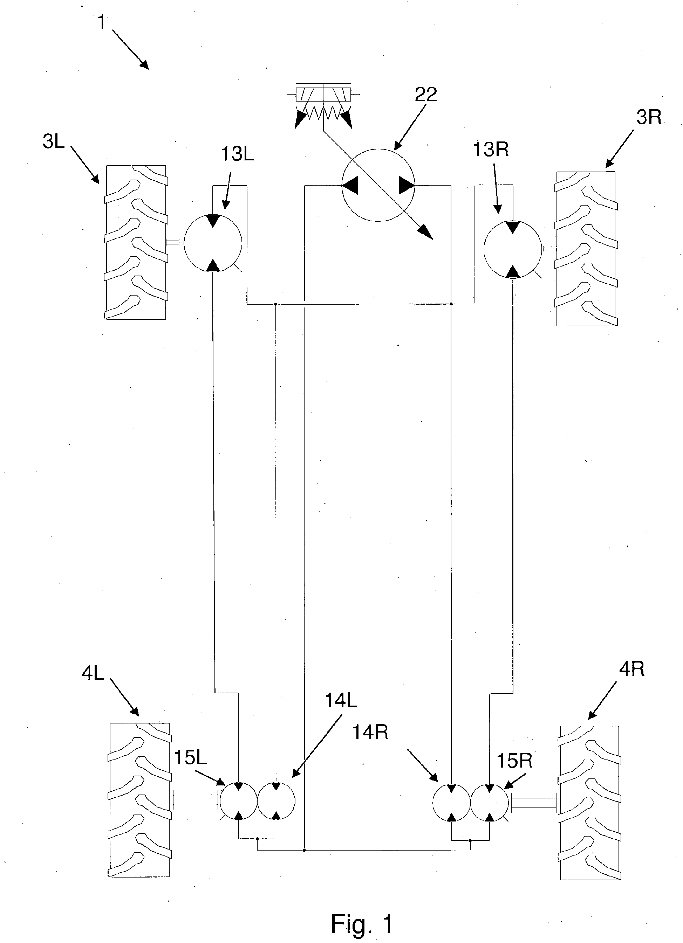

EP 0 547 947 A1 refers to a vehicle 1 comprising two front wheels 3 and two rear wheels 4. Each front wheel 3 is hydraulically powered by a front motor 13, and each rear wheel 4 is hydraulically powered by a first rear motor 14 and a second rear motor 15. A main pump 22 is provided to supply liquid to each motor 13, 14, 15 to drive the respective wheel 3, 4. On each side of the vehicle 1, the front motor 13 and the first rear motor 14 are parallelly coupled to the pump 22, while the front motor 13 and the second rear motor 15 are serially coupled to the pump 22, as shown in Figure 1.

It has been observed that such a vehicle 1 may experience undesirable lateral drift by its rear axle (not shown) when the traction between the wheels 3, 4 and the ground on one side is different to the traction between the wheels and the ground on the other side. This drift may be caused by (i) less friction between the wheels 3, 4 on one side of the vehicle 1 and the ground than between the other wheels 3, 4 and the ground, e.g., because the terrain type is different or (ii) a lateral tilt to the ground such that the wheels 3, 4 on one side of the vehicle 1 are arranged below the other wheels 3, 4 of the vehicle 1. To complicate the situation, the direction and extent of the lateral drift further depends on whether the vehicle 1 is travelling on flat ground, uphill (i.e., ascending) or downhill (i.e., descending).

It is an aim of the present invention to address the one or more disadvantages associated with this prior art.

### SUMMARY OF THE INVENTION

According to an aspect of the invention there is provided a utility vehicle comprising:
a front left wheel, hydraulically powered by a front left motor,
a rear left wheel, hydraulically powered by a first rear left motor and a second rear left motor,
a front right wheel, hydraulically powered by a front right motor,
a rear right wheel, hydraulically powered by a first rear right motor and a second rear right motor,
a pump,
wherein the front left motor, the first rear left motor, the front right motor, and the first rear right motor are parallelly coupled to the pump, the front left motor and the second rear right motor are serially coupled to the pump, and the front right motor and the second rear left motor are serially coupled to the pump.

This arrangement transfers torque between wheels on opposite sides of the utility vehicle. This can advantageously be used to counteract lateral sliding of utility vehicle, i.e., to the left or right, particularly when the utility vehicle is travels forward downhill (i.e., the vehicle is descending).

Preferably, the utility vehicle further comprises a controllable valve arranged to selectively switch between a cross-coupling configuration wherein the front left motor and the second rear right motor are serially coupled to the pump, and the front right motor and the second rear left motor are serially coupled to the pump, and a parallel-coupling configuration wherein the front left motor and the second rear left motor are serially coupled to the pump, and the front right motor and the second rear right motor are serially coupled to the pump.

The utility vehicle may further comprise a controller, operatively coupled to the controllable valve.

In an embodiment, the utility vehicle comprises a forward slope sensor operably coupled to the controller and equipped to generate a forward slope signal upon detection of a downward slope condition wherein a front end of the utility vehicle is positioned below a rear end of the utility vehicle. Preferably, the controller is configured to control the controllable valve in dependence of the downward slope signal. Most preferably, the controller is configured to arrange the controllable valve in the cross-coupling configuration in dependence of the downward slope signal.

When the utility vehicle travels forward downhill (i.e., the vehicle is descending), and there is greater traction between, e.g., the left wheels and the ground than between the right wheels and the ground, the vehicle is guided to left. Furthermore, the rear wheel with less traction, i.e. the rear right wheel, causes an increase in pressure on the front right wheel when the motors are configured in a parallel-coupling arrangement, since the displacement of the motors of the rear right wheel remains the same. Accordingly, there is an increase in torque on the right side of the vehicle, which results in sliding of the rear axle to the left. The cross-coupling arrangement advantageously transfer torque to the left side of the vehicle, thereby counterbalancing said sliding of the rear axle to the left.

The controllable valve may be arranged to selectively switch to a transitional configuration between the cross-coupling configuration and parallel configuration, wherein the front left motor, the front right motor, the second rear right motor and the second rear left motor are all serially coupled to the pump.

### BRIEF DESCRIPTION OF THE DRAWINGS

Embodiments of the invention will now be described by way of example with reference to the accompanying drawings, in which:
Figure 1 shows a schematic representation of a utility vehicle of the prior art.
Figure 2 shows a side view of a utility vehicle that may comprise a hydraulic system in accordance with the invention.
Figure 3 shows a front view of the utility vehicle of Figure 2.
Figure 4 shows a schematic representation of a first embodiment of the hydraulic system of Figure 2, not claimed as such.
Figure 5a shows part of the schematic representation of Figure 4, wherein a first controllable valve has been arranged to direct hydraulic fluid to a first rear motor.
Figure 5b shows part of the schematic representation of Figure 4, wherein a first controllable valve has been arranged to block hydraulic fluid to a first rear motor.
Figure 6 shows a schematic representation of a second embodiment of the hydraulic system of Figure 2 in accordance with the invention.
Figure 7 shows a schematic representation of the hydraulic system of Figure 6, provided with a second controllable valve that has been arranged in a cross-coupling configuration.
Figure 8 shows a schematic representation of the hydraulic system of Figure 6, provided with a second controllable valve that has been arranged in a parallel-coupling configuration.

### DETAILED DESCRIPTION

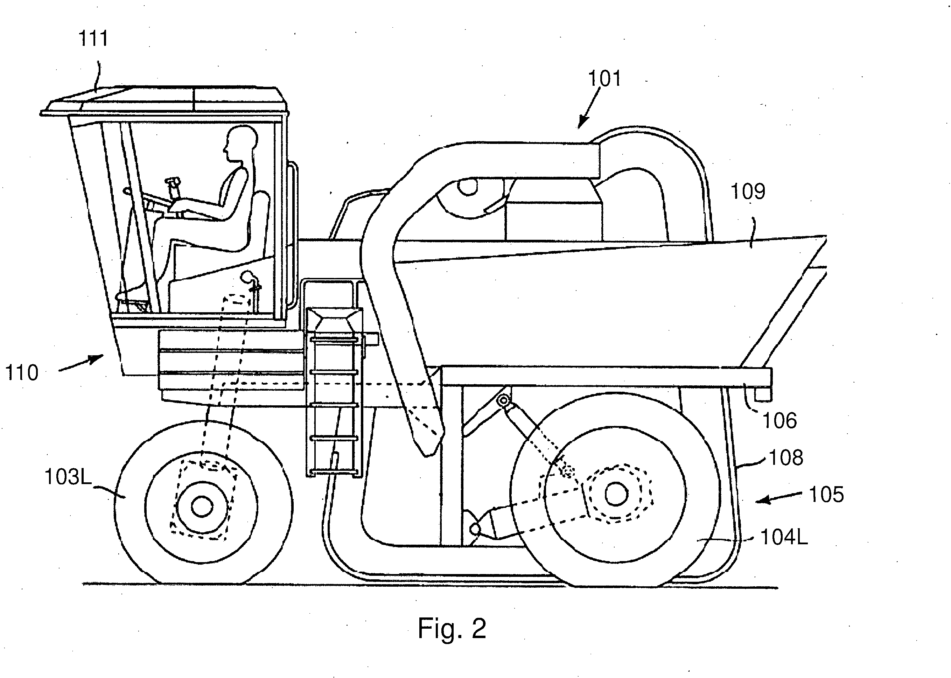

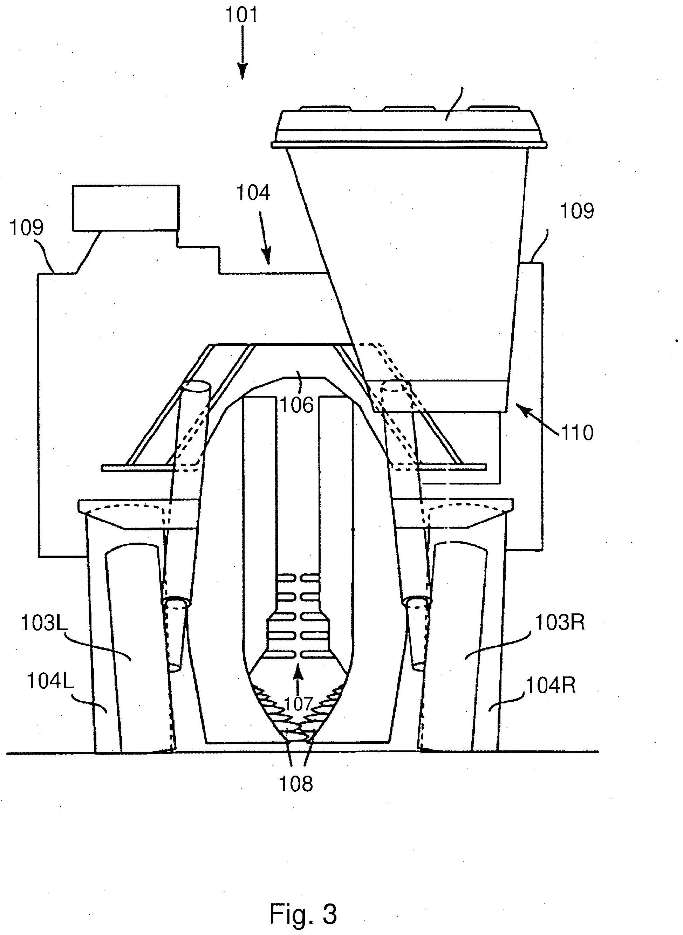

Figures 2 and 3 show a utility vehicle 101 in the form of a grape harvester comprising a chassis or vehicle frame 106 and four wheels 103, 104 coupled to said vehicle frame 106. The four wheels 103, 104 include a front left wheel 103L, a front right wheel 103R, a rear left wheel 104L and a rear right wheel 104R. The front wheels 103 are steerable, while the rear wheels 104 are non-steerable. Both the front wheels 103 and the rear wheels 104 are driven for moving the vehicle frame 106 over the ground. The vehicle frame 106 is in the form of a gantry for straddling a row of plants, such as grape vines.

In a known manner, the vehicle frame 106 carries a harvesting assembly 105, comprising a shaker assembly 107 for detaching the grapes from the vines and two elevator conveyors 108 for collecting the detached grapes and conveying them to two storage tanks 109 on the sides of vehicle 101. The harvesting assembly 105 may be fixed in a permanent manner to the vehicle frame 106 of the machine, or else, it may be made in the form of a removable assembly which is detachably affixed to the vehicle frame 106, so as to be capable of being replaced by other equipment or accessories, such as spraying and pruning equipment, or equipment for tilling the ground.

The driving and harvesting functions of the vehicle are controlled by an operator from an operator's platform 110, which is attached to the front portion of the vehicle frame 102. To increase the comfort of the operator, an environmentally insulated cab 111 is provided which surrounds the operator's platform 110.

Each of the wheels 103, 104 of the utility vehicle 101 is driven by at least one hydraulically powered motor 113, 114, 115. Such hydraulically driven wheels 103, 104 are well-suited for grape harvesters because a drive axle is not compatible with the gantry form of the vehicle frame 106 that is needed for straddling plants.

To provide hydraulic power to rotate the wheels 103, 104 of the utility vehicle 101, the utility vehicle 101 is provided with a hydraulic system 102.

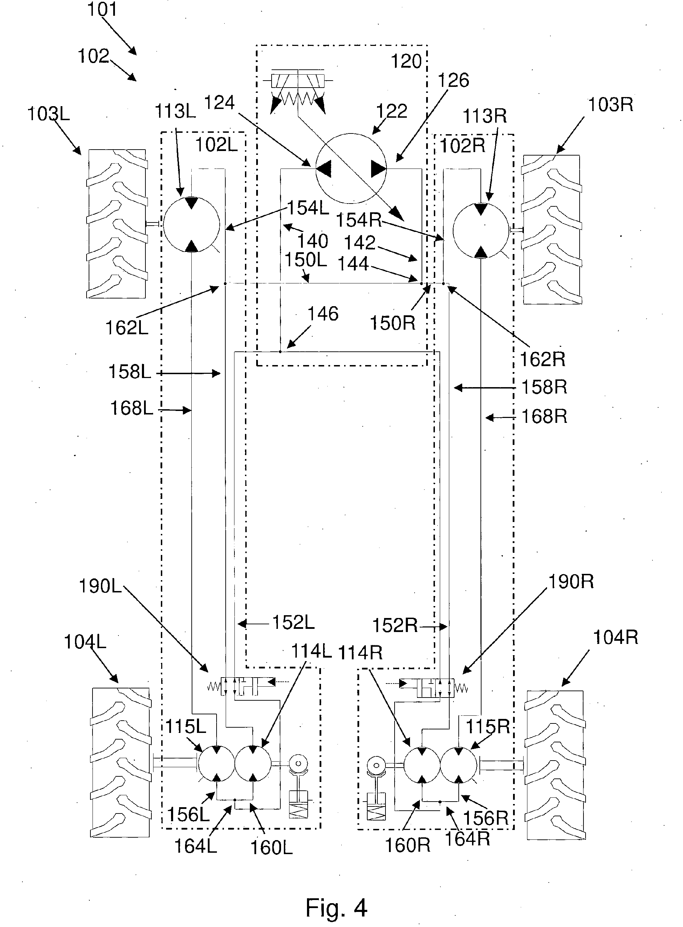

A first embodiment of the hydraulic system 102 is shown in Figure 4.

The hydraulic system 102 includes two identical, but mirror imaged sub-systems 102L, 102R - a left sub-system 102L providing hydraulic power to control the left wheels 103L, 104L of the utility vehicle 101 and a right sub-system 102R providing hydraulic power to control the right wheels 103R, 104R of the utility vehicle 101. To this end, each sub-system 102L, 102R is provided with a front motor 113L, 113R hydraulically powering its front wheel 103, and a first rear motor 114L, 114R and a second rear motor 115L, 115R hydraulically powering its rear wheel 104L, 104R.

The hydraulic system 102 also comprises a common pump system 120 hydraulically coupled to each of the sub-systems 102L, 102R. The common pump system 120 includes a common pump 122 directing hydraulic fluid to the motors 113, 114, 115 in each of the sub-systems 102L, 102R.

In each sub-system 102L, 102R, the front motor 113L, 113R and the first rear motor 114L, 114R are parallelly coupled to the common pump 122. That is to say, each sub-system 102L, 102R is configured such that hydraulic fluid from the common pump 122 is directed through either the front motor 113L, 113R or the first rear motor 114L, 114R during any particular cycle of the sub-system 102L, 102R. Meanwhile, the front motor 113L, 113R and the second rear motor 115L, 115R are serially coupled to the common pump 122 in each sub-system 102L, 102R. That is to say, each sub-system 102L, 102R is configured such that hydraulic fluid that is directed through the front motor 113L, 113R is also directed through the second rear motor 115L, 115R during any particular cycle of the sub-system 102L, 102R.

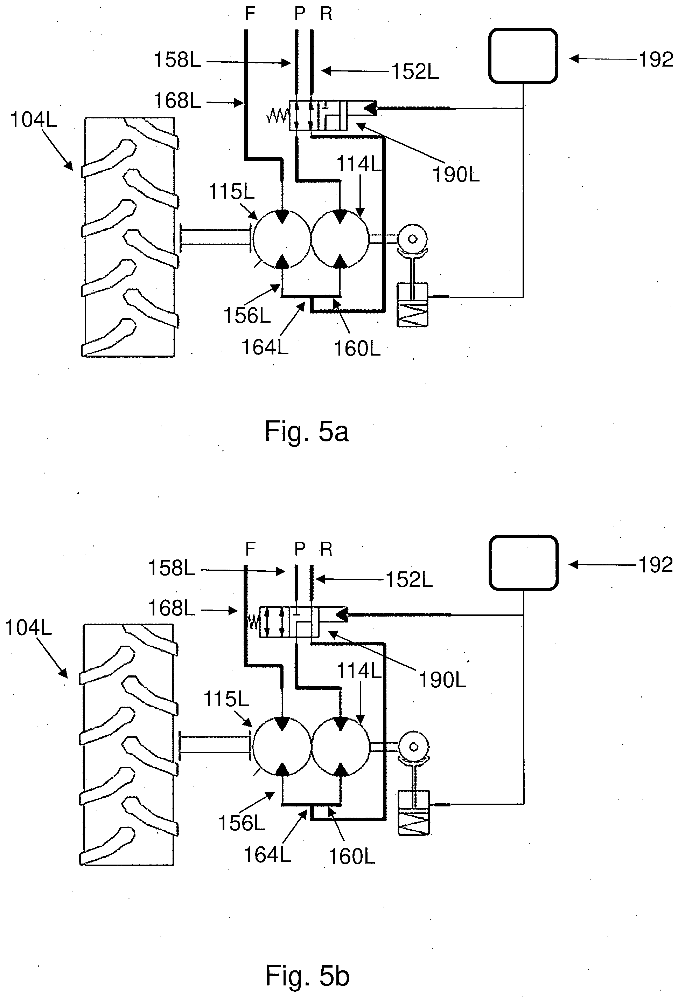

Each sub-system 102L, 102R is further provided with a first controllable valve 190L, 190R. Each first controllable valve 190L, 190R is arranged to selectively block hydraulic fluid flowing from the common pump 122 to the first rear motor 114L, 114R of the respective sub-system 102L, 102R. In other words, each first controllable valve 190L, 190R is arrangeable in either an unblocking arrangement, wherein the first controllable valve 190L, 190R is arranged to direct hydraulic fluid to the respective first rear motor 114L, 114R, and in a blocking arrangement (as shown in Figure 5a), wherein the first controllable valve 190L, 190R is arranged to prevent hydraulic fluid from reaching the respective first rear motor 114L, 114R (as shown in Figure 5b). To control which arrangement the first controllable valve 190L, 190R is in, the hydraulic system 102 is provided with an electronic controller 192 operatively coupled to each first controllable valve 190L, 190R.

When a first controllable valve 190L, 190R is blocking hydraulic fluid to a first rear motor 114L, 114R of a sub-system 102L, 102R, only the front motor 113L, 114L and the second rear motor 115L, 115R of said sub-system 102L, 102R are hydraulically powered. Since only one of two motors, i.e., the second rear motor 115L, 115R, are powering said rear wheel 104L, 104R in this configuration, the torque of said rear wheel 104L, 104R is reduced.

This reduction in torque on a rear wheel 104L, 104R of the utility vehicle 101 is advantageous in compensating and offsetting an undesirable and dangerous form of lateral sliding that has been analysed by the inventors, namely the lateral sliding that is experienced by utility vehicles 1 such as those of Figure 1, as will now be explained.

Said utility vehicles 1 of Figure 1 undergo lateral sliding when there is greater traction between the wheels 3, 4 and the ground on one side of the utility vehicle 101 than on the other side. This can be because the vehicle 1 is arranged on a lateral slope such that the wheels 3, 4 on one side of the utility vehicle 1 are lower than the other side, and more of the vehicle weight is leaning on the lower wheels 3, 4, resulting in possible tyre deformation on said wheels 3, 4. Likewise, differences in soil type may affect the level of traction between the wheels 3, 4 and the ground.

The inventors have discovered that the direction of lateral drift experienced by such vehicles 1 depends both on (i) whether the vehicle 1 is travelling on flat ground, travelling uphill (i.e., ascending) or travelling downhill (i.e., descending), and on (ii) which side of the vehicle 1 there is greater traction between the wheels 3, 4 and the ground.

In particular, when the utility vehicle 1 is traveling forward on flat ground or uphill (i.e., the vehicle 1 is ascending), the wheels 3, 4 exert a force on the ground in the backwards direction. This force is opposite to the tractive force exerted by the ground on the wheels 3, 4 in the forwards direction. When there is greater traction between the left wheels 3L, 4L of the vehicle 1 and the ground (e.g., because the left wheels 3L, 4L are arranged below the right wheels 3R, 4R), the forward traction force is greater on the left wheels 3L, 4L of the vehicle 1 than on the right wheels 3R, 4R. As a result, the vehicle 1 is guided to the right and the virtual rear axle of the vehicle 1 undesirably slides to the left.

In this situation, the first controllable valve 190L can act to limit this sliding by blocking hydraulic fluid to the left first rear motor 114L. In doing so, the torque of the rear left wheel 104L is reduced, and so the rear axle is pushed back to the right. This therefore compensates the unwanted lateral sliding to the left that would otherwise be experienced.

Instead, when the utility vehicle 1 of Figure 1 is travelling forward downhill (i.e., the vehicle 1 is descending), the weight of the vehicle 1 exerts a force on the ground in the forward direction. This force is opposite in direction to the tractive force exerted by the ground on the wheels 3, 4 in the backwards direction. When there is greater traction between the left wheels 3L, 4L of the vehicle 1 and the ground (e.g., because the left wheels 3L, 4L are arranged below the right wheels 3R, 4R), the backward traction force is greater on the left wheels 3L, 4L of the vehicle 1 than on the right wheels 3R, 4R. As a result, the vehicle 1 is observed to be guided to the left.

Furthermore, the virtual rear axle of the vehicle 1 is observed to slide to the left. This is because of the difference in traction across the two rear wheels 4L, 4F, and because the lack of adhesion on right rear wheel 4R amplifies the traction on front right wheel 3R. Accordingly, there is an increase in torque on the front right wheel 3R which results in a sliding of the rear axle to the left.

In this situation, the first controllable valve 190R can act to limit this sliding by blocking the hydraulic fluid to the right first rear motor 114L, 114R. In this way, the increase of pressure on front right wheel 104R is reduced, and so the sliding of rear axle to the left is also reduced. This therefore compensates the unwanted lateral sliding to the left that would otherwise be experienced.

Therefore, it is in these ways that the first controllable valves 190L, 190R can be used to reduce the undesirable and possibly dangerous form of lateral sliding associated with the utility vehicles 1 of the prior art. Moreover, it is immediately clear how the first controllable valves 190L, 190R can be used to limit lateral sliding when there is greater traction between the right wheels 3R, 4R of the vehicle 1 and the ground than on the left 3L, 4R.

The components of the hydraulic system 102 of the utility vehicle 101 will now be described in more detail.

Firstly, the common pump 120 may be any suitable pump for directing hydraulic fluid around the hydraulic system 102. The common pump 12 comprises a pump inlet 124 which receives hydraulic fluid and a pump outlet 126 out of which hydraulic fluid is expelled under pressure.

The motors 113, 114, 115 may be any suitable hydraulic motors for rotating the wheels 103, 104 using the hydraulic fluid from the common pump 122.

The hydraulic fluid used to perform work in the hydraulic system 102 may be any suitable fluid.

To transport hydraulic fluid between components of the hydraulic system 102, the hydraulic system 102 is provided with a plurality of conduits such a pipes, tubes or hoses, and a plurality of junctions connecting said conduits. Said junctions include splitting junctions which direct hydraulic fluid from a common conduit into at least two separate conduits and converging junctions which direct hydraulic fluid from at least two separate conduits into a common conduit.

The common pump system 120 includes two conduits in the form of a pump inlet conduit 140 and a pump outlet conduit 142, and two junctions in the form of a primary splitting junction 144 and primary converging junction 146.

The primary splitting junction 144 is located downstream of the pump outlet 126 of the common pump 122 and directs hydraulic fluid from the common pump 122 into each of the left and right sub-systems 102L, 102R. The pump outlet conduit 142 connects the pump outlet 126 of the common pump 122 to the primary splitting junction 144.

Upstream of the pump inlet 124 of the common pump 122, the primary converging junction 146 is arranged to direct hydraulic fluid from each of the left and right sub-systems 102L, 102R to the common pump 122. The pump inlet conduit 140 connects the primary converging junction 146 to the pump inlet 124 of the common pump 122.

The arrangement of conduits and junctions in both the left and right sub-systems 102L, 102R is the same except mirror imaged. For simplicity therefore, the conduits and junctions of only left sub-system 102L are described below, but the same applies equally to the right sub-system 102R.

The left sub-system 102L comprises seven conduits in the form of a sub-system inlet conduit 150L, a sub-system outlet conduit 152L, a series inlet conduit 154L, a series outlet conduit 156L, a series bridging conduit 168L, a parallel inlet conduit 158L and a parallel outlet conduit 160L, as well as two junctions in the form of a secondary splitting junction 162L and a secondary converging junction 164L.

The secondary splitting junction 162L is located downstream of the primary splitting junction 144 and directs hydraulic fluid from the primary splitting junction 144 to each of the front motor 113L and the first rear motor 114L. The sub-system inlet conduit 150L connects the primary splitting junction 144 to the secondary splitting junction 162L, the series inlet conduit 154L connects the secondary splitting junction 162L to the front motor 113L, and the parallel inlet conduit 158L connects the secondary splitting junction 162L to the first rear motor 114L.

Downstream of the front motor 113L, the second rear motor 115L is arranged. The series bridging conduit 168L is provided to connect the front motor 113L to the second rear motor 115L.

The secondary converging junction 164L is located downstream of each of the first rear motor 114L and the second rear motor 115L and directs hydraulic fluid from each of the first rear motor 114L and the second rear motor 115L to the primary converging junction 146 for return to the common pump 122. The series outlet conduit 156L connects the second rear motor 115L to the secondary converging junction 164L, the parallel outlet conduit 160L connects the first rear motor 114L to the secondary converging junction 164L, and the sub-system outlet conduit 152L connects the secondary converging junction 164L to the primary converging junction 146.

In this way, it is clear how the front motor 113L and the first rear motor 114L are parallelly coupled to the common pump 122, while the front motor 113L and the second rear motor 115L are serially coupled to the common pump 122, although other arrangements of conduits and junctions are conceivable.

Now that the components for transporting hydraulic fluid between components of the hydraulic system 102 have been described, more detail about the first controllable valves 190L, 190R and the controller 192 will be set out with reference to Figures 5a and 5b.

The arrangement of the first controllable valves 190L, 190R on both the left and right sides is the same except mirror imaged. For simplicity therefore, only the arrangement of the first controllable valve 190L on the left side will be described below, but the same applies equally to the controllable valve 190R on the right side.

The first controllable valve 190L may take any suitable form, but is preferably arranged to act on the parallel inlet conduit 158L and the sub-system outlet conduit 152L of the sub-system 102L.

In particular, when the first controllable valve 190L is arranged in the unblocking arrangement, i.e., as in Figure 5a, the parallel inlet conduit 158L is unblocked. As such, hydraulic fluid is directed to the first rear motor 114L from the common pump 122. Moreover, hydraulic fluid from each of the first and second rear motors 114L, 115L is directed through the secondary converging junction 162L, and towards the primary converging junction 146L.

When the first controllable valve 190L is arranged in the blocking arrangement, i.e., as in Figure 5b, the parallel inlet conduit 158L is blocked such that hydraulic fluid from the common pump 122 cannot be directed to the first rear motor 114L from the common pump 122. To this end, the first controllable valve 190L closes an inlet of the first controllable valve 190L into which a first part of the parallel inlet conduit 158L feeds. At the same time, the first controllable valve 190L keeps an outlet of the first controllable valve 190L out of which a second part the parallel inlet conduit 158L extends open, and provides a fluid connection from said outlet through the valve 190L into the sub-system outlet conduit 152L. In this way, the first controllable valve 190L advantageously ensures any remaining hydraulic fluid in the second part the parallel inlet conduit 158L is directed towards the sub-system outlet conduit 152L and back towards the common pump 122.

Now an overview of the controller 192 will be provided,

The controller 192 is configured to control whether the first controllable valve 190L, 190R is in the unblocking arrangement or the blocking arrangement. The controller 192 may do this automatically, e.g., based on detected characteristics of environment of the utility vehicle 101, and/ or based on operator input into the utility vehicle 101.

For example, the utility vehicle 101 may be provided with sensors (not shown) for detecting (i) whether the vehicle 101 is travelling on flat ground, travelling uphill (i.e., ascending) or travelling downhill (i.e., descending), and/ or whether (ii) whether there is greater traction between the wheels 103, 104 on one side of the utility vehicle 101 and the ground. On this basis, the controller 192 can cause the first controllable valve 190L, 190R to be arranged in the unblocking arrangement or the blocking arrangement, to act against lateral sliding of the utility vehicle 101.

To this end, the sensors may include a forward slope sensor for detecting a forward slope condition, i.e., whether the utility vehicle 101 is arranged such that either the front or rear part of the vehicle 101 is arranged above or below the opposite part of the vehicle 101. Likewise, the sensors may additionally or alternatively include a lateral slope sensor for detecting a lateral slope condition, i.e., whether the utility vehicle 101 is arranged such that one side of the vehicle 101 is arranged below the other. These sensors may be any suitable sensors or slope indicators and may include at least one accelerometer, pressure-based sensor and/ or GPS device. They may be located on the vehicle frame 106. They are operably coupled to the controller 192.

The lateral slope sensor is equipped to generate a lateral slope signal upon detection of a lateral slope condition. The lateral slope condition may either be a left lateral slope condition, wherein the left side, i.e., the left wheels 103L, 104L, of the utility vehicle 101 is positioned below the right side, i.e., the right wheels 103R, 104R, of the utility vehicle 101, or a right lateral slope condition, wherein the right side of the utility vehicle 101 is positioned below the left side of the utility vehicle 101. The controller 192 is configured to receive said lateral slope signal, and to control the first controllable valve 190L, 190R accordingly in dependence on said lateral slope signal.

The forward slope sensor is equipped to generate a forward slope signal upon detection of a forward slope condition. The forward slope condition may either be an upward slope condition, wherein the front end, i.e., the front wheels 103L, 103R, of the utility vehicle 101 is positioned above or at the same level as the rear end, i.e., the rear wheels 104L, 104R, of the utility vehicle 101, or a downward slope condition, wherein the front end of the utility vehicle 101 is positioned below the rear end of the utility vehicle 101. The controller 192 is configured to receive said forward slope signal, and to control the first controllable valve 190L, 190R accordingly in dependence on said forward slope signal.

In particular, the controller 192 is preferably configured in accordance with the following table:

| **Detected lateral slope condition:** | **Detected forward slope condition:** | **Effect without any response** | **Controller response:** | **Effect of controller response** |
|---|---|---|---|---|
| Left | Upward | Lateral sliding to the left | Arranging first controllable valve on left side of the vehicle in the blocking arrangement | Reduction in torque on the rear left wheel - the rear axle is pushed to the right |
| Right | Upward | Lateral sliding to the right | Arranging first controllable valve on right side of the vehicle in the blocking arrangement | Reduction in torque on the rear right wheel - the rear axle is pushed to the left |
| Left | Downward | Lateral sliding to the left | Arranging first controllable valve on right side of the vehicle in the blocking arrangement | Reduction in torque on the rear right wheel - the rear axle is pushed to the right |
| Right | Downward | Lateral sliding to the right | Arranging first controllable valve on left side of the vehicle in the blocking arrangement | Reduction in torque on the rear left wheel - the rear axle is pushed to the left |

In this way, the controller 192 can automatically compensate for the lateral sliding experienced by utility vehicles 1 of the prior art by controlling the left and right first controllable valves 190L, 190R.

Additionally or alternatively, the utility vehicle 101 may be provided with a sensor in the form of at least one input interface (not shown) such as a graphical operator interface (GUI) or a button for operation by an operator of the utility vehicle 101. This at least one input interface is preferably arranged on a dashboard (not shown) of the operator's platform 110 where the operator of the utility vehicle 101 can operate it with ease. Depending on the lateral sliding experienced by the utility vehicle 1, the operator of the utility vehicle 1 can input the lateral and/ or forward slope condition of the utility vehicle 1 (i.e. in place of a slope indicator) into the input interface so as to compensate against said sliding associated therewith. On this basis, the correct controller 192 will then cause the appropriate first controllable valve 190L, 190R to be arranged in the appropriate arrangement to compensate against the effects of the lateral sliding.

Variations on the utility vehicle 101 described above will also be apparent to the skilled person.

For example, the utility vehicle 101 may comprise more than four wheels 103, 104. Likewise, the hydraulic system 102 may not include a common pump system 120. Instead, each of the sub-systems 102L, 102R may include its own separate in common pump 122. In this way, the sub-systems 102L, 102R may be made separated and distinct. Likewise, two separate controllers 192L, 192R can be used, one for each sub-system 102L, 102R.

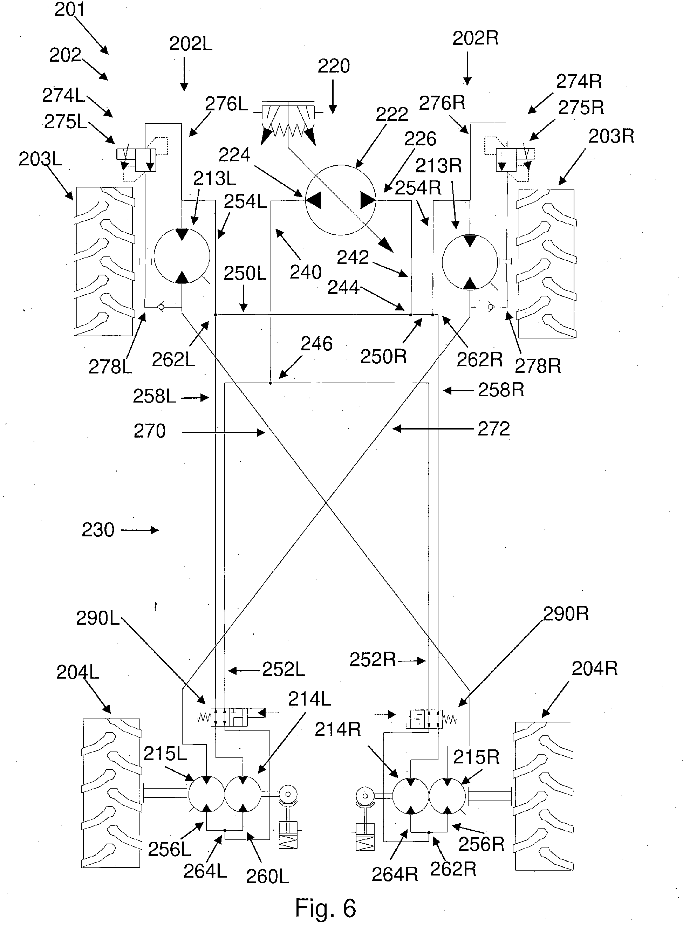

A second embodiment of the hydraulic system 202 is shown in Figure 6. This embodiment of the hydraulic system 202 includes the features of the first embodiment.

However, instead of the front motor 113L, 113R and the second rear motor 115L, 115R being serially coupled to the common pump 122 in each sub-system 102L, 102R, the front left motor 213L and the second rear right motor 215R are serially coupled to the common pump 222, and the front right motor 213R and the second rear left motor 215L are serially coupled to the common pump 222.That is to say, the hydraulic system 202 is configured such that hydraulic fluid that is directed through the front left motor 213L is also directed through the second rear right motor 215R during any particular cycle of the hydraulic system 202, while hydraulic fluid that is directed through the front right motor 213R is also directed through the second rear right motor 215R during any particular cycle of the hydraulic system 202.

To this end, the hydraulic system 202 is provided with a bridging sub-system 230 - in place of the series bridging conduits 168L, 168R - that directs hydraulic fluid between the front left motor 213L and the second rear right motor 215R and between the front right motor 213R and the second rear left motor 215L. This arrangement of the bridging sub-system 230 may be understood as a cross-coupling between the left and right sub-systems 202L, 202R, and it acts to transfer torque between wheels 203, 204 on opposite sides of the utility vehicle 201.

This transfer in torque between wheels 203, 204 on opposite sides of the utility vehicle 201 is also advantageous in compensating and offsetting the lateral sliding that is associated with the utility vehicles 1 of Figure 1, when said vehicles 1 are driving forward downhill, as will now be explained.

The utility vehicle 1 of Figure 1 does not include a cross-coupling arrangement, and instead has a parallel-coupling of the motors 13, 14, 15 wherein the front left motor 13L and the first rear right motor 14R are serially coupled to the common pump 222, while the front right motor 13R and the second rear right motor 15R are serially coupled to the common pump 22. In this way, the utility vehicle only acts to transfer torque between wheels 3, 4 on the same side of the utility vehicle 1.

As explained above, such utility vehicles 1 undergo lateral sliding when there is greater traction between the wheels 3, 4 and the ground on one side of the utility vehicle 1 than on the other side, for example because the vehicle 1 is arranged on a lateral slope.

When such a vehicle 1 travels forward downhill (i.e., the vehicle 1 is descending), the weight of the vehicle 1 exerts a force on the ground in the forward direction, while the tractive force is exerted by the ground on the wheels 3, 4 in the backwards direction. When there is greater traction between the left wheels 3L, 4L of the vehicle 1 and the ground, the backward traction force is greater on the left wheels 3L, 4L of the vehicle 1 than on the right wheels 3R, 4R. As a result, the vehicle 1 is observed to be guided to the left.

Furthermore, the virtual rear axle of the vehicle 1 is observed to slide to the left. This is because of the difference in traction across the two rear wheels 4L, 4F, and because the lack of adhesion on right rear wheel 4R amplifies the traction on front right wheel 3R due to the parallel-coupling of the motors 13, 14, 15. Accordingly, there is an increase in torque on the front right wheel 3R which results in an sliding of the rear axle to the left.

The cross-coupling arrangement of motors 213, 214, 215 acts to reduce or even counteract this sliding of the rear axle to the left. In particular, less traction on the rear right wheel 204R now results in an increase in pressure on the series line connecting to the 213L motor due to the cross-coupling arrangement of the motors 213, 214, 215. Accordingly, there is an increase in torque on the front left wheel 203L, and the sliding of the rear axle to the left is reduced or even counteracted.

The same, but opposite compensatory effect can be achieved in situations where there is greater traction between the right wheels 3R, 4R of the vehicle 1 and the ground than on the left wheels 3L, 4R.

The components specific to this second embodiment of the hydraulic system 202 will now be described in more detail.

To direct hydraulic fluid between the front left motor 213L and the second rear right motor 215R and between the front right motor 213R and the second rear left motor 215L, the bridging sub-system 230 is provided with a first bridging conduit 270 and second bridging conduit 272. The first bridging conduit 270 connects the front left motor 213L and the second rear right motor 215R, while the second bridging conduit 272 connects the front right motor 213R and the second rear left motor 215L. Hence, the second rear right motor 215R is located downstream of the front left motor 213L, while the second rear left motor 215L is located downstream of the front right motor 213R.

In this way, the front left motor 213L, the first rear left motor 214L, the front right motor 213R, and the first rear right motor 214R are parallelly coupled to the common pump 222, while the front left motor 213L and the second rear right motor 215R are serially coupled to the common pump 222, and the front right motor 213R and the second rear left motor 215L are serially coupled to the common pump 222.

To assist with the transfer for torque from one side of the vehicle 201 to the other, each of the left and right hydraulic systems 201 are preferably provided with a relieve valve sub-system 274L, 274R arranged in parallel the respective front left motor 213L and front right motor 213R. To this end, each relieve valve sub-system 274 L, 274R comprises a relieve valve 275 L, 274R and a valve inlet conduit 276 L, 274R and a valve outlet conduit 278 L, 274R. The valve inlet conduit 276 L, 274R stems from the respective series inlet conduit 254L L, 274R and feeds into an inlet of the respective relieve valve 275 L, 274R, while the valve outlet conduit 276 **L,** 274R feeds out of the outlet of the respective relief valve 274, L, 274R and enters into the respective bridging conduit 270, 272.

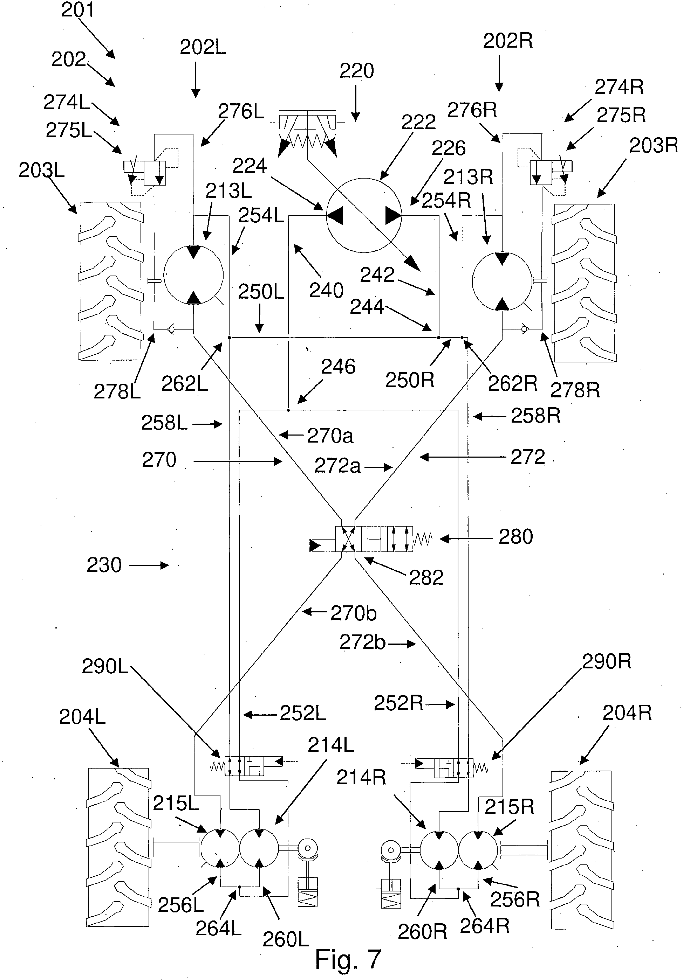

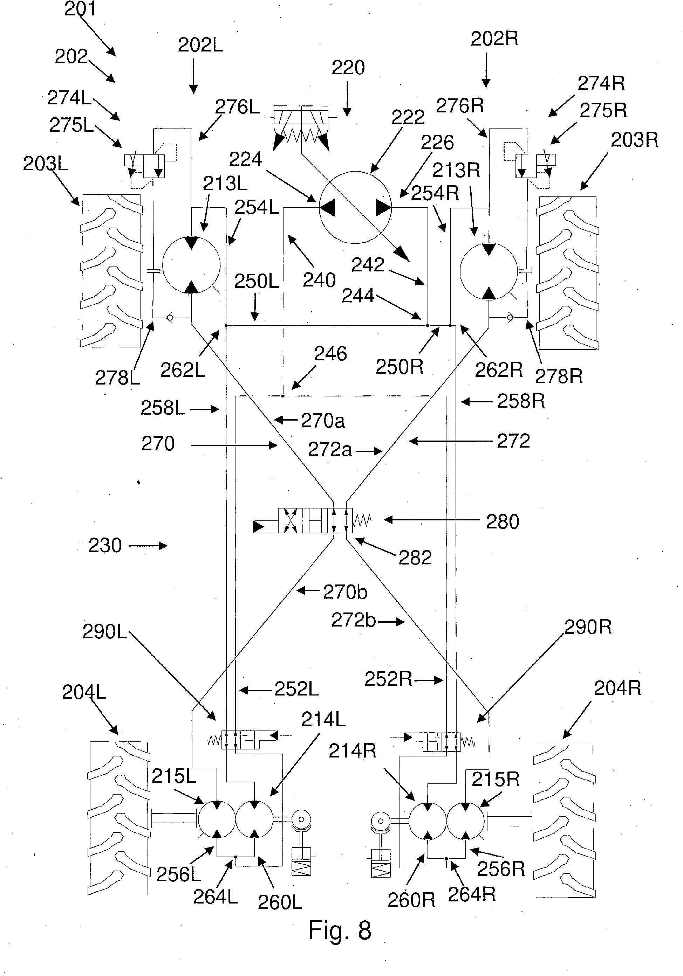

In Figures 7 and 8, the bridging sub-system 230 is provided with a second controllable valve 280. This second controllable valve 280 is arrangeable in at least a cross-coupling configuration and in a parallel-coupling configuration.

When the second controllable valve 280 is in the cross-coupling configuration, the hydraulic system 202 is arranged in the cross-coupling arrangement, wherein the front left motor 213L and the second rear right motor 215R are serially coupled to the common pump 222, and the front right motor 213R and the second rear left motor 215L are serially coupled to the common pump 222, i.e., in the arrangement of Figure 6.

When the second controllable valve 280 is in the parallel-coupling configuration, the hydraulic system 202 is arranged in the parallel-coupling arrangement, wherein the front left motor 213L and the second rear left motor 215L are serially coupled to the common pump 222, and the front right motor 213R and the second rear right motor 215R are serially coupled to the common pump 222, i.e., in the arrangement of Figure 4.

To this end, the second controllable valve 280 may take any suitable form, but is preferably arranged to act on the first and second bridging conduits 270, 272, at an intersection 282 therebetween. In this way therefore, the first and second bridging conduits 270, 272 are each divided into first and second parts 270a, 270b, 272a, 272b.

The second controllable valve 280 includes a left inlet, a right inlet, a left outlet, and a right outlet. The first part 270a of the first bridging conduit 270 connects the front left motor 213L to the left inlet. The first part 272a of the second bridging conduit 272 connects the front right motor 213R to the right inlet. The second part 270b of the first bridging conduit 270 connects the right outlet to the second rear right motor 215R. The second part 272b of the second bridging conduit 272 connects the left outlet to the second rear left motor 215L.

The second controllable valve 280 is able to connect some or all of said inlets and outlets.

Hence, when the second controllable valve 280 is in the cross-coupling configuration, the second controllable valve 280 connects the left inlet with the right outlet, and the right inlet with the left outlet, as shown in Figure 7. In this way, the front left motor 213L and the second rear right motor 215R are serially coupled to the common pump 222 and the front right motor 213R and the second rear left motor 215L are also serially coupled to the common pump 222. As explained above, this configuration may be preferred when the utility vehicle 201 is travelling forward downhill, i.e., when the utility vehicle 201 is descending.

Meanwhile, when the second controllable valve 280 is arranged in the parallel-coupling configuration, the second controllable valve 280 connects the left inlet with left outlet, and the right inlet with the right outlet, as shown in Figure 8. In this way, the front left motor 213L and the second rear right motor 215R are serially coupled to the common pump 222 and the front right motor 213R and the second rear left motor 215L are also serially coupled to the common pump 222. This configuration may be preferred when the utility vehicle 201 is travelling forward on flat ground or travelling uphill, i.e., when the utility vehicle 201 is ascending.

Additionally, the second controllable valve 280 can be arranged in a transitional configuration, wherein the second controllable valve 280 connects both of the left and right inlets with both of the left and right outlets. In this way, the second rear right motor 215R and the second rear left motor 215L are all serially coupled to the common pump 222. This transitional configuration is preferably arranged between the cross-coupling configuration and the parallel-coupling configuration, such that the second controllable valve 280 has to temporarily pass through the transitional configuration when cycling between the cross-coupling configuration and the parallel-coupling configuration.

To control which configuration the second controllable valve 280 is in, the utility vehicle 201 is provided with a controller (not shown) operatively coupled to the second controllable valve 280. The controller is preferably configured to control whether the second controllable valve 280 is in the cross-coupling configuration or the parallel-coupling configuration automatically, e.g., based on detected characteristics of environment of the utility vehicle 201, or based on operator input into the utility vehicle 201. This controller may be the same as the controller 192 in the first embodiment, or different.

For example, the utility vehicle 201 may be provided with sensors (not shown) for detecting (i) whether the vehicle 201 is travelling on flat ground, travelling uphill (i.e., ascending) or travelling downhill (i.e., descending), and/ or whether (ii) whether there is greater traction between the wheels 203, 204 on one side of the utility vehicle 201 and the ground. On this basis, the controller can cause the second controllable valve 280 to be arranged in the cross-coupling configuration or the parallel-coupling configuration, to act against lateral sliding.

To this end, the sensors may include a forward slope sensor for detecting a forward slope condition, i.e., whether the utility vehicle 201 is arranged such that either the front or rear part of the vehicle 201 is arranged above or below the other part of the vehicle 201. These sensors may be any suitable sensors or slope indicators and may include at least one accelerometer, pressure-based sensor and/ or GPS device They may be located on the vehicle frame 106. They are operably coupled to the controller.

The forward slope sensor is equipped to generate a forward slope signal upon detection of a forward slope condition. The forward slope condition may either be an upward slope condition, wherein the front end, i.e., the front wheels 203, 204, of the utility vehicle 201 is positioned above or at the same level as the rear end, i.e., the rear wheels 203, 204, of the utility vehicle 201, or a downward slope condition, wherein the front end of the utility vehicle 201 is positioned below the rear end of the utility vehicle 201. The controller is configured to receive said forward slope signal, and to control the second controllable valve 280 accordingly in dependence on said forward slope signal.

In particular, the controller is preferably configured to arrange the second controllable valve 280 in the cross-coupling configuration when the downward slope condition is detected, and to arrange the second controllable valve 280 in the parallel-coupling configuration when the upward slope condition is detected.

In this way, the controller can automatically compensate for the lateral sliding experienced by utility vehicles 1 of the prior art by controlling the second controllable valve 280.

Additionally or alternatively, the utility vehicle 101 may be provided with a sensor in the form of at least one input interface (not shown) such as a graphical operator interface (GUI) or a button for operation by an operator of the utility vehicle 101. This at least one input interface is preferably arranged on a dashboard (not shown) of the operator's platform 110 where the operator of the utility vehicle 101 can operate it with ease. Depending on the lateral sliding experienced by the utility vehicle 1, the operator of the utility vehicle 1 can input the forward slope condition of the utility vehicle 1 (i.e. in place of a slope indicator) into the input interface so as to compensate against said sliding associated therewith. On this basis, the correct controller will then cause the appropriate second controllable valve 280 to be arranged in the appropriate arrangement to compensate against the effects of the lateral sliding.

As shown in Figures 6 to 8, the hydraulic system 202 of the second embodiment can be provided with the first controllable valves 190L, 190R of the first embodiment. In other embodiments, the hydraulic system 202 of the second embodiment may not include said controllable valves 190L, 190R and/ or the associated components.

Variations on the utility vehicle 201 described above will also be apparent to the skilled person.

For example, the utility vehicle 201 may comprise more than four wheels 203, 204. The hydraulic system 202 may not include a common pump system 220. Instead, each of the sub-systems may include its own separate pump 222.

## Claims

1. A utility vehicle (201) comprising:
a front left wheel (203L), hydraulically powered by a front left motor (213L),
a rear left wheel (204L), hydraulically powered by a first rear left motor (214L) and a second rear left motor (215L),
a front right wheel (203R), hydraulically powered by a front right motor (213R),
a rear right wheel (204R), hydraulically powered by a first rear right motor (214R) and a second rear right motor (215R),
a pump (222),
wherein the front left motor (213L), the first rear left motor (214L), the front right motor (213R), and the first rear right motor (214R) are parallelly coupled to the pump (222),
**characterized in that** the front left motor (213L) and the second rear right motor (215R) are serially coupled to the pump (222), and the front right motor (213R) and the second rear left motor (215L) are serially coupled to the pump (222).

2. A utility vehicle (201) as claimed in claim 1, further comprising a controllable valve (280) arranged to selectively switch between
a cross-coupling configuration wherein the front left motor (213L) and the second rear right motor (215R) are serially coupled to the pump (222), and the front right motor (213R) and the second rear left motor (215L) are serially coupled to the pump (222), and
a parallel-coupling configuration wherein the front left motor (213L) and the second rear left motor (215L) are serially coupled to the pump (222), and the front right motor (213R) and the second rear right motor (215R) are serially coupled to the pump (222).

3. A utility vehicle (201) as claimed in claim 2, further comprising a controller, operatively coupled to the controllable valve (280).

4. A utility vehicle (201) as claimed in claim 3, further comprising a forward slope sensor operably coupled to the controller and equipped to generate a forward slope signal upon detection of a downward slope condition wherein a front end of the utility vehicle (201) is positioned below a rear end of the utility vehicle (201), and wherein the controller is configured to control the controllable valve (280) in dependence of the downward slope signal.

5. A utility vehicle (201) as claimed in claim 4, wherein the controller is configured to arrange the controllable valve (280) in the cross-coupling configuration in dependence of the downward slope signal.

6. A utility vehicle (201) as claimed in any of claims 2 to 5, wherein the controllable valve (280) is arranged to selectively switch to a transitional configuration between the cross-coupling configuration and parallel configuration, wherein the front left motor (213L), the front right motor (213R), the second rear right motor (215R) and the second rear left motor (215L) are all serially coupled to the pump (222).

7. A utility vehicle (201) as claimed in any of the previous claims, wherein the utility vehicle is a grape harvester.

## Patentansprüche

1. Nutzfahrzeug (201), umfassend:
ein vorderes linkes Rad (203L), das durch einen vorderen linken Motor (213L) hydraulisch angetrieben ist,
ein hinteres linkes Rad (204L), das durch einen ersten hinteren linken Motor (214L) und einen zweiten hinteren linken Motor (215L) hydraulisch angetrieben ist,
ein vorderes rechtes Rad (203R), das durch einen vorderen rechten Motor (213R) hydraulisch angetrieben ist,
ein hinteres rechtes Rad (204R), das durch einen ersten hinteren rechten Motor (214R) und einen zweiten hinteren rechten Motor (215R) hydraulisch angetrieben ist,
eine Pumpe (222),
wobei der vordere linke Motor (213L), der erste hintere linke Motor (214L), der vordere rechte Motor (213R) und der erste hintere rechte Motor (214R) parallel mit der Pumpe (222) verbunden sind,
**dadurch gekennzeichnet, dass** der vordere linke Motor (213L) und der zweite hintere rechte Motor (215R) seriell mit der Pumpe (222) verbunden sind, und der vordere rechte Motor (213R) und der zweite hintere linke Motor (215L) seriell mit der Pumpe (222) verbunden sind.

2. Nutzfahrzeug (201) nach Anspruch 1, weiterhin umfassend ein steuerbares Ventil (280), das dazu eingerichtet ist, wahlweise umzuschalten zwischen
einer Kreuzkopplungskonfiguration, in der der vordere linke Motor (213L) und der zweite hintere rechte Motor (215R) seriell mit der Pumpe (222) verbunden sind, und der vordere rechte Motor (213R) und der zweite hintere linke Motor (215L) seriell mit der Pumpe (222) verbunden sind, und
einer Parallelkopplungskonfiguration, in der der vordere linke Motor (213L) und der zweite hintere linke Motor (215L) seriell mit der Pumpe (222) verbunden sind, und der vordere rechte Motor (213R) und der zweite hintere rechte Motor (215R) seriell mit der Pumpe (222) verbunden sind.

3. Nutzfahrzeug (201) nach Anspruch 2, weiterhin umfassend eine Steuereinrichtung, die in Wirkverbindung mit dem steuerbaren Ventil (280) steht.

4. Nutzfahrzeug (201) nach Anspruch 3, weiterhin umfassend einen Vorwärtsneigungssensor, der in Wirkverbindung mit der Steuereinrichtung steht und dazu eingerichtet ist, bei Erkennung einer Abwärtsneigungsbedingung, bei der ein vorderes Ende des Nutzfahrzeugs (201) unterhalb eines hinteren Endes des Nutzfahrzeugs (201) positioniert ist, ein Vorwärtsneigungssignal zu erzeugen, wobei die Steuereinrichtung dazu eingerichtet ist, das steuerbare Ventil (280) in Abhängigkeit von dem Abwärtsneigungssignal zu steuern.

5. Nutzfahrzeug (201) nach Anspruch 4, wobei die Steuereinrichtung dazu eingerichtet ist, das steuerbare Ventil (280) in Abhängigkeit von dem Abwärtsneigungssignal in der Kreuzkopplungskonfiguration anzuordnen.

6. Nutzfahrzeug (201) nach einem der Ansprüche 2 bis 5, wobei das steuerbare Ventil (280) dazu eingerichtet ist, wahlweise in eine Übergangskonfiguration zwischen der Kreuzkopplungskonfiguration und der Parallelkopplungskonfiguration umzuschalten, wobei der vordere linke Motor (213L), der vordere rechte Motor (213R), der zweite hintere rechte Motor (215R) und der zweite hintere linke Motor (215L) alle seriell mit der Pumpe (222) verbunden sind.

7. Nutzfahrzeug (201) nach einem der vorhergehenden Ansprüche, wobei das Nutzfahrzeug eine Traubenerntemaschine ist.

## Revendications

1. Un véhicule utilitaire (201) comprenant :
une roue avant gauche (203L), entraînée hydrauliquement par un moteur avant gauche (213L),
une roue arrière gauche (204L), entraînée hydrauliquement par un premier moteur arrière gauche (214L) et un second moteur arrière gauche (215L),
une roue avant droite (203R), entraînée hydrauliquement par un moteur avant droit (213R),
une roue arrière droite (204R), entraînée hydrauliquement par un premier moteur arrière droit (214R) et un second moteur arrière droit (215R),
une pompe (222),
dans lequel le moteur avant gauche (213L), le premier moteur arrière gauche (214L), le moteur avant droit (213R) et le premier moteur arrière droit (214R) sont couplés en parallèle à la pompe (222),
**caractérisé en ce que** le moteur avant gauche (213L) et le second moteur arrière droit (215R) sont couplés en série à la pompe (222), et le moteur avant droit (213R) et le second moteur arrière gauche (215L) sont couplés en série à la pompe (222).

2. Un véhicule utilitaire (201) selon la revendication 1, comprenant en outre une vanne commandable (280) agencée pour commuter de manière sélective entre
une configuration à couplage croisé dans laquelle le moteur avant gauche (213L) et le second moteur arrière droit (215R) sont couplés en série à la pompe (222), et le moteur avant droit (213R) et le second moteur arrière gauche (215L) sont couplés en série à la pompe (222), et
une configuration à couplage en parallèle dans laquelle le moteur avant gauche (213L) et le second moteur arrière gauche (215L) sont couplés en série à la pompe (222), et le moteur avant droit (213R) et le second moteur arrière droit (215R) sont couplés en série à la pompe (222).

3. Un véhicule utilitaire (201) selon la revendication 2, comprenant en outre un dispositif de commande, couplé fonctionnellement à la vanne commandable (280).

4. Un véhicule utilitaire (201) selon la revendication 3, comprenant en outre un capteur de pente avant couplé fonctionnellement au dispositif de commande et équipé pour générer un signal de pente avant lors de la détection d'une condition de pente négative dans lequel une extrémité avant du véhicule utilitaire (201) est positionnée sous une extrémité arrière du véhicule utilitaire (201), et dans lequel le dispositif de commande est configuré pour commander la vanne commandable (280) en fonction du signal de pente négative.

5. Un véhicule utilitaire (201) selon la revendication 4, dans lequel le dispositif de commande est configuré pour agencer la vanne commandable (280) dans la configuration à couplage croisé en fonction du signal de pente négative.

6. Un véhicule utilitaire (201) selon l'une quelconque des revendications 2 à 5, dans lequel la vanne commandable (280) est agencée pour commuter de manière sélective vers une configuration transitoire entre la configuration à couplage croisé et la configuration en parallèle, dans laquelle le moteur avant gauche (213L), le moteur avant droit (213R), le second moteur arrière droit (215R) et le second moteur arrière gauche (215L) sont tous couplés en série à la pompe (222).

7. Un véhicule utilitaire (201) selon l'une quelconque des revendications précédentes, dans lequel le véhicule utilitaire est une vendangeuse.
